# EUROPÄISCHE PATENTANMELDUNG

(11) **EP 2 221 350 A1**
(43) Veröffentlichungstag der Anmeldung: **25.08.2010**
(21) Anmeldenummer: 10004351.2
(22) Anmeldetag: 26.08.2008
(51) Int. Cl.: C09D 9/00, A62D 3/00, B44D 3/16

(54) **Verfahren zum entfernen einer Gefahrstoff enthaltende schicht, von einer Oberfläche**

(62) Teilanmeldung aus: 08015014.7
(71) Anmelder: Ritt, Hans, 94110 Wegscheid (DE)
(72) Erfinder: Ritt, Hans, 94110 Wegscheid (DE)
(74) Vertreter: Klauer, Stephan

(57) **Zusammenfassung**

Die Erfindung betrifft ein Verfahren zum Entfernen bzw. Erneuern einer Schicht (4), insbesondere einer Lack- bzw. Farbschicht, von/auf einer mit der Schicht (4) bedeckten Oberfläche (2), wobei Staub erzeugende Bearbeitungsschritte zum Entfernen der Schicht (4) vermieden werden. Gemäß einem Aspekt der Erfindung wird ein Staub erzeugender Bearbeitungsschritt auf einem mit mindestens einer neu aufgebrachten Grundierungsschicht (26) bedeckten Teilbereich der Oberfläche (2) ausgeführt. Dabei kann der Staub erzeugende Bearbeitungsschritt nur bis zu einer Tiefe, die geringer als die Schichtdicke (D) der neu aufgebrachten Grundierungsschicht ist, ausgeführt werden, und ein Absaugen von dabei entstehenden, losen Partikeln bzw. Teilchen, insbesondere unter Benutzung einer Absaugvorrichtung, umfassen. Das Verfahren kann in-situ bzw. ohne Ausbau und/oder Transport von zumindest einem Teil der Oberfläche (2) zu einer anderen Arbeitsstätte bzw. zu einer Werkstatt ausgeführt werden.

## Beschreibung

### Beschreibung

Die vorliegende Erfindung betrifft ein Verfahren zum Entfernen einer Schicht, beispielsweise einer Farb- oder Lackschicht, die insbesondere Gefahrstoffe enthalten kann, von einer Oberfläche. Für Arbeiten mit bzw. Verwendungen von Gefahrstoffen enthaltenden Materialien existieren in der Regel Vorschriften über die Begrenzung der Freisetzung dieser Gefahrstoffe bzw. Schutzvorschriften für die mit den Arbeiten betrauten Personen. Die Erfindung betrifft ferner ein Verfahren zum Nachweis der Einhaltung dieser Vorschriften beim Entfernen einer einen Gefahrstoffe enthaltenden Schicht von einer Oberfläche.

Ein Beispiel für von Oberflächen zu entfernende Schichten sind Lack- bzw. Farbschichten, die beispielsweise auf Metall- oder Holzoberflächen aufgebracht sein können, und die beispielsweise nach einer Verwitterung oder anderweitigen Abnutzung entfernt bzw. erneuert werden müssen. Bis in die 1980er Jahre enthielten Farben und Lacke häufig Schwermetalle, wie etwa Blei, oder anorganische Schwermetallverbindungen oder Schwermetallzubereitungen, die später als Gefahrstoffe erkannt und klassifiziert worden sind. Für Arbeiten an einem einen Gefahrstoff enthaltenden Objekt bzw. für Arbeiten mit einem einen Gefahrstoff enthaltenden Stoff gelten in vielen Ländern, einschließlich Deutschland, Vorschriften einerseits bezüglich der Begrenzung der Freisetzung des Gefahrstoffs in die Umwelt und andererseits Schutzvorschriften für die Personen, die mit den Arbeiten an dem einen Gefahrstoff enthaltenden Objekt bzw. Stoff betraut sind. Derartige Vorschriften können Schutzmassnahmen bzw. -vorkehrungen umfassen, die logistisch bzw. technisch aufwändig und kostspielig bereitzustellen sind. Im Einzelfall könnte von der Einhaltung der vorgeschriebenen Schutzmassnahmen bzw- -vorkehrungen Abstand genommen werden, und zwar insbesondere wenn die Art und Weise der Ausführung der Arbeiten auch ohne die vorgeschriebenen Schutzmassnahmen bzw- -vorkehrungen so gestaltet wird, dass eine Belastung der Umwelt bzw. der mit den Arbeiten betrauten Personen durch den Gefahrstoff, beispielsweise im Rahmen vorgegebener Grenzwerte, unbedenklich bzw. nicht gegeben ist.

Beispielsweise gilt in Deutschland für Arbeiten an bzw. mit Stoffen, die schwermetallhaltige Gefahrstoffe, insbesondere Blei enthalten, die TRGS (technische Regel für Gefahrstoffe) Nr. 505. Dieses Regelwerk richtet sich an Arbeitgeber und enthält besondere Schutzmassnahmen für Tätigkeiten mit Blei und anorganischen Bleiverbindungen sowie bleihaltigen Zubereitungen. Tätigkeiten, für die die TRGS 505 Anwendung findet, umfassen das Entfernen bleihaltiger Beschichtungen, z.B. durch Abbrennen, mittels abrasiver Verfahren (z.B. Bürsten, Schleifen, Strahlen) oder Abbeizen und/oder das Bearbeiten von Blei, Bleilegierungen oder bleihaltigen Leckschichten durch mechanische Verfahren (Schleifen, Polieren, Zerspanen) oder thermische Verfahren. Daher fällt auch das Entfernen von Lack- bzw. Farbschichten von bleihaltigen Farben, wie sie häufig bis in die 1980er Jahre verwendet worden sind, unter diese Vorschrift.

Für die oben genannten Tätigkeiten schreibt die TRGS 505 beispielsweise folgendes vor: Staubquellen sind einzukapseln; bleibelastete Arbeitsplätze sind an stationäre Absauganlagen anzuschließen; in den Arbeitsbereichen sind mobile Absauganlagen zur Verfügung zu stellen; durch lüftungstechnische Maßnahmen ist die Zufuhr unbelasteter Frischluft bzw. Umluft sicherzustellen; bleihaltige Vor-, Zwischen- und Endprodukte sind emissionsfrei zu transportieren; Bodenflächen in Arbeitsbereichen sind zu befeuchten, um diffuse (Blei-) Staubemissionen zu minimieren; Arbeitsbereiche sind mindestens täglich feucht zu reinigen; sowie bestimmte Maßnahmen zur persönlichen Hygiene, wie das Reinigen von Schuhen mit geeignetem Gerät vor dem Verlassen von bleibelasteten Arbeitsbereichen, Wechsel der Arbeitskleidung mindestens täglich oder auch mehrfach pro Schicht und Reinigen der Arbeitskleidung vor Pausen und am Schichtende.

Das Einkapseln von Staubquellen und die Benützung von Absauganlagen kann insbesondere beim Renovieren von Fenstern und Fensterflügeln in-situ an Gebäuden technisch bzw. logistisch aufwändig werden, weil ein zu renovierendes Fenster an der Außenseite und an der Innenseite des Gebäudes einzukapseln wäre und im eingekapselten Arbeitsbereich Absauganlagen bereitgestellt werden müssten.

Die Einhaltung der Vorschriften nach der TRGS 505 und ggf. ergänzende gewerbeaufsichtliche Vorschriften ist besonders dann wichtig, wenn bei den Tätigkeiten gefahrstoffhaltiger Staub entsteht. Dies ist bei den derzeit üblichen Verfahren zum Entfernen von Farb- bzw. Lackschichten der Fall, weil diese Verfahren trockene, d.h. in trockener Umgebung, ausgeführte Verfahren sind, die einen abrasiven Bearbeitungsschritt, wie etwa Schleifen oder Abschaben, umfassen. Beim Schleifen ist die Staubentwicklung besonders stark. Beim Abschaben entstehen zunächst größere Teile, jedoch auch Brösel und dabei auch Staub.

Zu den derzeit gebräuchlichen, normalerweise in-situ eingesetzten Entlackungsverfahren gehören thermische Verfahren, bei denen ein beispielsweise mittels eines Heißluftgebläses erzeugter Strahl mit heißer Luft mit einer so hohen Temperatur auf die zu entfernende Lack- bzw. Farbschicht gerichtet wird, so dass das Holz noch nicht brennt, die Farbe jedoch weich wird, ggf. Blasen aufwirft, und dann abrasiv entfernt, beispielsweise abgeschabt, wird. Dabei entstehen durch die Hitze gesundheitsgefährdende Gase, und beim Abschaben der Schicht Brösel und beim Zerbröseln auch Staub. Alternativ kann ein Gasbrenner zum Erwärmen der Farbe eingesetzt werden, insbesondere wenn sich die zu entfernende Farbschicht auf einer Metalloberfläche befindet. Alternativ zur thermischen Behandlung kann die zu entfernende Lack- bzw. Farbschicht mit einer UV-Lampe bestrahlt und anschließend abrasiv entfernt werden, wobei ebenfalls Brösel und Staub entstehen.

Eine andere Klasse gängiger, in-situ ausgeführter Verfahren zum Entfernen von Farb- bzw. Lackschichten (Entlackungsverfahren) umfasst mechanisches Entfernen der Lack- bzw. Farbschichten, insbesondere Lackhobeln, Schleifen oder Hochdruckstrahlen (-sandstrahlen). Diese Verfahren umfassen als wesentlichen Bearbeitungsschritt ein trockenes, abrasives Bearbeiten der Lack- bzw. Farbschicht, wobei Staub aus dem Material der zu entfernenden Schicht erzeugt wird. Beim Schleifen, dass insbesondere maschinell, beispielsweise mittels einer Flexschleifmaschine, unterstützt werden kann, ist die Staubentwicklung besonders hoch.

Insgesamt stellt es sich derzeit als Problem dar, mit Schwermetallen, wie insbesondere Blei, belastete Farb- bzw. Lackanstriche zu renovieren bzw. zu entfernen und zu erneuern, insbesondere in-situ zu renovieren bzw. zu entfernen und zu erneuern, weil die derzeitig in-situ üblichen Entlackungsverfahren im Wesentlichen trocken ausgeführte Verfahrensschritte mit Staubentwicklung umfassen.

Es ist eine der Erfindung zugrundeliegende Aufgabe, den Schutzaufwand bzw. den Aufwand zum Auffangen von, insbesondere einen Gefahrstoff enthaltenden Staub beim Entfernen einer insbesondere den Gefahrstoff enthaltenden Schicht von einer Oberfläche zu verringern.

Zur Lösung der Aufgabe wird ein erfahren zum Entfernen einer Schicht von einer mit der Schicht versehenen Oberfläche bereitgestellt, bei dem erfindungsgemäß Staub erzeugende Bearbeitungsschritte beim Entfernen der Schicht vermieden werden. Die Schicht kann insbesondere eine Lack- bzw. Farbschicht sein. Die zu entfernende Schicht kann ferner einen Gefahrstoff, insbesondere Schwermetalle, wie etwa Blei, anorganische Schwermetallverbindungen und schwermetallhaltige Zubereitungen enthalten. Insbesondere kann das Verfahren zum Entfernen der Schicht in-situ ausgeführt werden, d.h. insbesondere ohne Ausbau bzw. Transport zu einer anderen Bearbeitungsstätte bzw. zu einer Werkstatt von zumindest einem Teil der Oberfläche.

Das Vermeiden von Staub erzeugenden Bearbeitungsschritten beim Entfernen der Schicht kann dadurch erreicht werden, dass das Entfernen der Schicht ein Benetzen bzw. Befeuchten der Schicht mit einem flüssigen Mittel, insbesondere mit einem Mittel zum Abbeizen, Aufweichen, Anlösen bzw. Ablösen der Schicht umfasst. Durch das Benetzen bzw. Befeuchten der Schicht mit einem flüssigen Mittel bleibt das Material der zu entfernenden Schicht in einem aufgrund der Feuchtigkeit gebundenen Zustand, so dass eine Stauberzeugung vermieden wird und die feuchte Schicht ohne größeren Aufwand und insbesondere ohne Staubentwicklung von der Oberfläche entfernt, aufgefangen und entsorgt werden kann. Durch das Befeuchten der Schicht mit dem flüssigen Mittel bleibt das Material der zu entfernenden Schicht integral bzw. feucht und ohne Staubentwicklung gebunden.

Ein Staub erzeugender Bearbeitungsschritte, wie insbesondere ein Schleifen, wird erfindungsgemäß nur auf mit mindestens einer neu aufgebrachten Grundierungsschicht beschichteten Teilbereichen der Oberfläche ausgeführt. Der Staub erzeugende Bearbeitungsschritt, wie insbesondere Schleifen, kann erforderlich sein, um die Oberfläche zu glätten bzw. um die Oberfläche für weitere Bearbeitungsschritte vorzubereiten. Durch das Begrenzen des Staub erzeugenden Bearbeitungsschritts auf mit einer aufgebrachten Grundierungsschicht bedeckte Teilbereiche der Oberfläche wird die sonst mögliche Entwicklung von Staub aus gefahrstoffbelastetem Material der zu entfernenden Schicht vermieden.

Insbesondere kann der Staub erzeugende Bearbeitungsschritt, der nur auf der neu aufgebrachten Grundierungsschicht ausgeführt wird, nur bis zu einer Tiefe, die geringer als die Schichtdicke der neu aufgebrachten Grundierungsschicht ist, ausgeführt werden. Die Begrenzung der Arbeitstiefe des Staub erzeugenden Bearbeitungsschritts verhindert sicher die Entwicklung von Staub aus dem Material, insbesondere einem möglicherweise einen Gefahrstoff enthaltenden Material, der ursprünglich von der Oberfläche zu entfernenden Schicht.

Nach einem zweiten Aspekt der vorliegenden Erfindung wird ein Verfahren zum Entfernen von einer Schicht, insbesondere einer Lack- bzw. Farbschicht, von einer mit der Schicht versehenen Oberfläche bereitgestellt, wobei das Verfahren die folgenden Schritte umfasst:
(i) Aufbringen eines flüssigen Mittels zum Abbeizen, Aufweichen, Anlösen bzw. Ablösen, insbesondere eines Abbeizmittels, auf zumindest Teilbereiche der zu entfernenden Schicht,
(ii) Entfernen von durch das Einwirken des flüssigen Mittels aufgeweichten, angelösten bzw. abgelösten Teilen der Schicht zumindest in Teilbereichen der Bereiche, wo das flüssige Mittel aufgebracht worden ist, so dass zumindest in diesen Teilbereichen bloßliegende Teile der Oberfläche entstehen.

Erfindungsgemäß umfasst das Verfahren ferner:
(iii) Aufbringen von mindestens einer Grundierungsschicht auf zumindest Teilbereiche der in Schritt (ii) erzeugten bloßliegenden Teilen der Oberfläche.

Die Schicht kann insbesondere eine Lack- bzw. Farbschicht sein. Die zu entfernende Schicht kann ferner einen Gefahrstoff, insbesondere Schwermetalle, wie etwa Blei, anorganische Schwermetallverbindungen und schwermetallhaltige Zubereitungen enthalten. Insbesondere kann das Verfahren zum Entfernen der Schicht in-situ ausgeführt werden, d.h. insbesondere ohne Ausbau bzw. Transport zu einer anderen Bearbeitungsstätte bzw. zu einer Werkstatt von zumindest einem Teil der Oberfläche.

Durch das Einwirken des flüssigen Mittels im Schritt (ii) bleibt das Material der zu entfernenden Schicht gebunden in einem feuchten bzw. gelartigen bzw. aufgeweichten Zustand, jedenfalls so, dass kein Staub entstehen kann. Bezüglich Schritt (iii) ist hervorzuheben, dass dieser ohne einen vorher ausgeführten Staub erzeugenden Schritt, wie etwa ein Schleifen, ausgeführt wird. Durch das Aufbringen der Grundierungsschicht im Schritt (iii) auf bloßliegende Teilbereiche der Oberfläche werden Reste der zu entfernenden Schicht, die in tiefer in die Oberfläche hineinragenden Vertiefungen, wie beispielsweise Öffnungen bzw. Poren vorhanden sind und im Schritt (ii) nicht erreicht bzw. entfernt worden sind, durch die Grundierungsschicht überdeckt bzw. maskiert und auf diese Weise gebunden.

Das Verfahren ist insbesondere dann vorteilhaft, wenn die zu entfernende Schicht einen Gefahrstoff, insbesondere ein Schwermetalle, wie beispielsweise Blei, anorganische Schwermetallverbindungen und schwermetallhaltige Zubereitungen enthält. Dadurch, dass die abgelösten Teile der einen Gefahrstoff enthaltenden Schicht durch die Einwirkung des flüssigen Mittels gebunden bleiben und infolgedessen ohne Staubentwicklung von der Oberfläche entfernt und entsorgt werden können, und dass zurückbleibende Teile der Schicht durch die Grundierungsschicht maskiert und damit ebenfalls gebunden werden, ist eine Freisetzung des Gefahrstoffs, insbesondere durch Entwicklung von Staub, ausgeschlossen. Daher kann in Betracht gezogen werden, im Einzelfall das Bereitstellen von Schutzvorkehrungen nach ansonsten für den Umgang mit dem Gefahrstoff geltenden Vorschriften zu erlassen.

Die Oberfläche, von der eine Schicht zu entfernen ist, kann eine Metalloberfläche oder eine Holzoberfläche sein. Das erfindungsgemäße Verfahren ist nicht durch die Art des Substratmaterials, zu dem die Oberfläche gehört, beschränkt.

Im Schritt (iii) kann vor dem Aufbringen der Grundierungsschicht ein Imprägnierungsmittel bzw. eine Imprägnierungsschicht aufgebracht werden. Dadurch wird die Oberfläche, wie etwa die Metall- oder Holzoberfläche, vor Einflüssen der Umwelt, z.B. das Entfernen bzw. Erneuern der ursprünglich auf der Oberfläche vorhandenen Schicht erforderlich gemacht hat, besser geschützt.

Unter Staub ist hierin eine Sammelbezeichnung für feinste feste Teilchen bzw. Partikel, die in Gasen, insbesondere in der Luft, aufgewirbelt lange Zeit schweben können zu verstehen.

Unter einer Grundierungsschicht wird hierin eine Schicht verstanden, die auf die bloßliegende bzw. mit einer Imprägnierung versehene Oberfläche haftend aufgebracht werden kann und die nicht in feinste Poren der Oberfläche eindringt, sondern die Oberfläche im wesentlichen flächig verbunden überdeckt, und die eine Haftvermittlung für darauf aufgebrachte Lack- bzw. Farbschichtaufbauten bereitstellen kann.

Unter einer Imprägnierungsschicht wird hierin eine Schicht verstanden, die auf die bloßliegende Oberfläche aufgebracht werden kann, die die Oberfläche penetrieren kann, und die jedenfalls die Oberfläche vor schädlichen bzw. die Oberfläche angreifenden Einflüssen aus der Umgebung, wie etwa Feuchtigkeit oder Pilzbefall, schützt.

In den im Schritt (ii) erzeugten Teilbereichen, in denen bloßliegende Teile der Oberfläche entstehen, können noch Reste der zu entfernenden Schicht auf der Oberfläche verblieben sein, insbesondere in Vertiefungen bzw. tiefen Poren der Oberfläche.

Im Schritt (i) kann das Aufbringen des flüssigen Mittels mehrfach wiederholt werden, insbesondere so oft, bis die zu entfernende Schicht über einen wesentlichen Bereich ihrer Dicke abgebeizt, aufgeweicht, angelöst bzw. abgelöst ist. Dadurch wird die Wirksamkeit des flüssigen Mittels vergrößert.

Das flüssige Mittel kann ein Abbeizmittel zum Abbeizen von Farb- bzw. Lackschichten sein. Vorzugsweise ist das flüssige Mittel eines, das keinen Schadstoff- oder Gefahrstoffgehalt aufweist bzw. für das bei der Anwendung keine aufwändigen Personenschutzmassnahmen erforderlich sind, die über die übliche Verwendung eines Atemschutzfilters, einer Schutzbrille sowie üblicher Schutzbekleidung und -schuhen hinausgehen. Vorzugsweise weist das flüssige Mittel eine Zulassung zur Verwendung an der Arbeitsstätte, insbesondere auf einer Baustelle, auf, so dass es von den mit den mit dem Entfernen der Schicht beauftragten Personen verwendet werden kann, ohne dass andere Personen an der Arbeitsstätte, insbesondere der Baustelle, nicht gefährdet werden. Insbesondere kann das flüssige Mittel eine insbesondere auf einem Datenblatt dokumentierte Gefahrstoffdeklaration mit einem GISBAU-Code, der die Verwendung an einer Arbeitsstätte, insbesondere einer Baustelle, zulässt, aufweisen. Insbesondere kann das flüssige Mittel umweltverträgliche bzw. biologisch abbaubare Löse- bzw. Lösungsmittel enthalten.

Das Aufbringen des flüssigen Mittels in Schritt (i) kann aus einer Gruppe von Behandlungsschritten ausgewählt sein, die Aufpinseln und Aufsprühen des Mittels zumindest auf Teilbereiche der zu entfernenden Schicht und Eintauchen von zumindest Teilbereichen der Oberfläche mit der zu entfernenden Schicht in das flüssige Mittel oder Kombinationen aus diesen Schritten umfasst. Diese Behandlungsschritte bewirken ein gleichmäßiges Aufbringen des flüssigen Mittels.

In Schritt (ii) kann das Entfernen von Teilen der Schicht ein mechanisches Entfernen, insbesondere ein abrasives Entfernen, wie etwa Abschaben bzw. Kratzen umfassen. Beispielsweise kann das abrasive Entfernen die Benutzung einer Schabvorrichtung, wie beispielsweise eines Spachtels, umfassen. Ein abrasives Entfernen kann leicht so ausgeführt werden, dass die durch das flüssige Mittel aufgeweichte, angelöste, abgelöste bzw. abgebeizte Schicht nahezu vollständig von der Oberfläche entfernt wird, ohne die Oberfläche selbst zu beschädigen oder nennenswert abzutragen.

Schritt (ii) kann ferner ein Absaugen von durch das Entfernen von Teilen der Schicht entstehenden losen Partikeln bzw. Teilchen umfassen. Dazu kann insbesondere eine Absaugvorrichtung verwendet werden.

Vorzugsweise wird Schritt (ii) in einem zeitlichen Abstand nach dem Schritt (i) ausgeführt, wobei der zeitliche Abstand so gewählt ist, dass die zu entfernende Schicht durch die Wirkung des im Schritt (i) aufgebrachten flüssigen Mittels, insbesondere hinreichend bzw. noch stets, angelöst, aufgeweicht, gelartig bzw. feucht und insbesondere noch nicht wieder getrocknet ist. So wird im Schritt (ii) beim Entfernen von Teilen der Schicht die Ausbildung feiner Staubteilchen verhindert und Teile der entfernten Schicht, die größere Abmessungen aufweisen, beispielsweise Brösel, können ohne weiteres vollständig aufgefangen und in einen Behälter gegeben werden können.

Schritt (ii) kann ferner ein Auffangen bzw. Sammeln von durch das Entfernen von der Oberfläche erzeugten losen Teilen der Schicht in staubdicht abdichtbaren Behältern umfassen. Vorzugsweise sind die Behälter auch emissionsfrei verschließbar. So können die von der Oberfläche entfernten Reste der Schicht sicher und staubfrei entsorgt werden.

Das Verfahren kann ferner zwischen dem Schritt (ii) und dem Schritt (iii) einen Schritt des Reinigens der aus Schritt (ii) zurückbleibenden Oberfläche unter Benutzung einer Flüssigkeit umfassen. Das Reinigen mit einer Flüssigkeit bewirkt ein noch gründlicheres Entfernen von abgelösten Teilen bzw. Bröseln der Schicht von der Oberfläche.

Das Reinigen kann ein Aufbringen des Flüssigkeitsfilms zumindest auf Teilbereiche der aus Schritt (ii) zurückbleibenden Oberfläche und ein anschließendes Entfernen, insbesondere durch Abwischen des Films umfassen. Insbesondere kann das Reinigen ein Abwischen unter Benutzung eines mit der Flüssigkeit getränkten Schwamms bzw. eines schwammartigen Gegenstands umfassen, wodurch der Reinigungsschritt in einem einzigen Arbeitsgang ausgeführt werden kann. Das Reinigen kann ein Abwischen unter Benutzung eines mit der Flüssigkeit, insbesondere Wasser, getränkten Schwamms umfassen.

Die in dem Reinigungsschritt benutzte Flüssigkeit kann ausgewählt sein aus einer Gruppe, die ein Neutralisationsmittel zum Neutralisieren einer Wirkung des flüssigen, im Schritt (i) eingesetzten Mittels, ein Lösungsmittel für die in der zu entfernenden Schicht enthaltenen Lack- bzw. Farbmaterialien sowie Wasser oder Kombinationen daraus umfasst.

Das oben beschriebene Verfahren mit den Schritten (i) bis (iii) zeichnet sich dadurch aus, dass vor dem Schritt (iii) jeglicher Bearbeitungsschritt, der lose Staubpartikel mit Resten der Schicht erzeugt, insbesondere ein Schleifen, vermieden wird. Dadurch bleibt das Material der zu entfernenden Schicht und insbesondere ein darin enthaltener Gefahrstoff, gebunden. Dies gewährleistet, dass Teile der Schicht nicht unkontrolliert freigesetzt werden. Infolgedessen besteht eine Aussicht, dass auf die Einhaltung etwaiger für den Umgang mit Gefahrstoff enthaltenden Stoffen geltender Vorschriften, insbesondere das Bereitstellen aufwändiger Schutzmassnahmen, verzichtet werden kann.

Das Verfahren kann ein nach dem Schritt (iii) ausgeführtes Zwischenschleifen von zumindest Teilbereichen der in Schritt (iii) mit der Grundierungsschicht versehenen Bereichen der Oberfläche umfassen. Das Zwischenschleifen bereitet die grundierte Oberfläche noch besser auf nachfolgende Bearbeitungs- bzw. Beschichtungsschritte vor. Weil es auf die mit der Grundierungsschicht versehenen Bereiche der Oberfläche begrenzt ist, erzeugt dieses Zwischenschleifen keinen Staub aus dem Material der ursprünglich auf der Oberfläche vorhandenen Schicht.

Vorzugsweise wird das Zwischenschleifen bei gleichzeitigem Absaugen von dabei entstehenden Staubpartikeln durchgeführt. Bei Holzoberflächen kann das Absaugen insbesondere unter Benutzung von Staubfiltern mit der Staubklasse H, die für Staub erzeugende Arbeiten mit Holz vorgeschrieben sind, durchgeführt werden. Das mit dem Zwischenschleifen einhergehende Absaugen stellt einen zusätzlichen Schutz vor einer möglichen Freisetzung des ursprünglich die Oberfläche bedeckenden Schichtmaterials in die Luft bzw. Umwelt dar.

Das Zwischenschleifen kann unter Benutzung von Kleingeräten bzw. von Hand unter Benutzung von Schleifpads bzw. Schleifpapier ausgeführt werden. So kann die Bearbeitungstiefe des Zwischenschleifens besonders gut kontrolliert bzw. gesteuert werden, und insbesondere auf die Schichtdicke der Grundierungsschicht begrenzt werden.

Das Zwischenschleifen wird insbesondere bezüglich seiner Bearbeitungstiefe auf eine maximale Tiefe begrenzt, die geringer ist als die Schichtdicke der im Schritt (iii) aufgebrachten Grundierungsschicht. So wird sichergestellt, dass die von der Grundierungsschicht maskierten Reste der ursprünglichen Schicht auf der Oberfläche gebunden bleiben.

Nach einem dritten Aspekt der vorliegenden Erfindung wird ein Verfahren bereitgestellt zum Nachweis der Einhaltung bei Arbeiten an einem zu bearbeitenden, einen Gefahrstoff enthaltenden Objekt bzw. Gegenstand von Vorschriften über die Begrenzung der Freisetzung eines Gefahrstoffs, insbesondere in der Form von Staub, bzw. von Vorschriften zum Schutz der Umwelt und von einer mit den Arbeiten betrauten Person vor einer Belastung mit dem Gefahrstoff, beispielsweise beim Entfernen einer Schicht, die einen Gefahrstoff enthalten kann, von einer Oberfläche. Dieses Verfahren umfasst:
die Durchführung eines Verfahrens zum Entfernen einer Schicht von einer Oberfläche wie oben beschrieben, sowie mindestens einen Schritt, der ausgewählt ist aus einer Gruppe, die folgendes umfasst:
   (a) Ausbau bzw. Demontage eines zu bearbeitenden Objekts bzw. Gegenstands und Transport zu einer Bearbeitungsstätte, wo nach geltenden Vorschriften erforderlichen Schutzeinrichtungen bzw. Schutzvorkehrungen, einschließlich insbesondere Personenschutzausrüstung, eine staubdichte Umhüllung bzw. ein staubdichter Raum mit Luftabsaugung und Luftfilterung, bereitgestellt sind,
   (b) Messung der Belastung der Umwelt, einschließlich insbesondere der Luft bzw. mit Staub besetzbaren Oberflächen, mit dem Gefahrstoff vor Beginn der Ausführung des oben beschriebenen Verfahrens zum Entfernen der Schicht von der Oberfläche im Umfeld des Ausbau- bzw. Demontageorts bzw. im Umfeld der Bearbeitungsstätte,
   (c) Messungen der Belastung der Umwelt mit dem Gefahrstoff während bzw. nach Ausführung eines der Schritte nach einem der oben beschriebenen Verfahren zum Entfernen der Schicht von der Oberfläche,
   (d) medizinische Untersuchung von zumindest einer Person, die zumindest einen Verfahrensschritt des oben genannten Verfahrens zum Entfernen der Schicht von der Oberfläche ausführt bzw. beiwohnt, auf Belastung mit dem Gefahrstoff, und oder Kombinationen aus den Schritten (a) bis (d).

Das Verfahren kann umfassen, nachzuweisen, dass bei mindestens einem der Schritte (b) und (c) mindestens ein vorgeschriebener Grenzwert für die Belastung der Umwelt mit dem Gefahrstoff eingehalten wird, und insbesondere dass alle vorgeschriebenen Grenzwerte eingehalten werden. Das Verfahren auch umfassen, nachzuweisen, dass beim Schritt (d) mindestens ein vorgeschriebener Grenzwert für die Belastung der Person mit dem Gefahrstoff eingehalten wird, insbesondere dass alle vorgeschriebenen Grenzwerte eingehalten werden.

Das Verfahren umfassen das Erlangen einer Ausnahmegenehmigung, die von mindestens einer Pflicht zur Einhaltung einer Vorschrift zum Schutz der Umwelt bzw. von mit der Arbeit betrauten Person befreit, insbesondere wenn mindestens einer der vorgenannten Nachweise über die Einhaltung eines Grenzwerts erbracht worden ist, insbesondere wenn alle Nachweise erbracht worden sind.

In dem Verfahren nach dem dritten Aspekt kann der Gefahrstoff Blei und ein vorgeschriebener Grenzwert eine Konzentration von nicht mehr als 0,1 mg/m3 Blei in der Luft sein.

Weitere vorteilhafte Ausführungsformen, Merkmale und Vorteile der Erfindung ergeben sich aus der folgenden ausführlichen Beschreibung im Zusammenhang mit den beigefügten Zeichnungen. Darin zeigen:
Fig. 1 einen vertikalen Querschnitt durch eine Oberfläche mit einer darauf angeordneten, zu entfernenden Schicht;
Fig. 2 einen vertikalen Querschnitt durch die Oberfläche aus der Fig. 1 beim Auftragen eines flüssigen Mittels zum Abbeizen bzw. Anlösen;
Fig. 3 einen vertikalen Querschnitt durch die Oberfläche aus der Fig. 2 nach Einwirken des flüssigen Mittels;
Fig. 4 einen vertikalen Schnitt durch die Oberfläche aus der Fig. 3, bei einem abrasiven Entfernen der Schicht;
Fig. 5 einen vertikalen Schnitt durch die Oberfläche nach dem in Fig. 4 veranschaulichten Entfernen der mit dem flüssigen Mittel behandelten Schicht;
Fig. 6 einen vertikalen Querschnitt durch die Oberfläche aus der Fig. 5 nach Aufbringen eines Imprägnierungsmittels bzw. einer imprägnierenden Schicht; und
Fig. 7 einen vertikalen Schnitt durch die Oberfläche aus der Fig. 6 beim Aufbringen einer Grundierungsschicht.

Im folgenden wird eine Ausführungsform des Verfahrens nach der Erfindung beispielhaft für eine Anwendung beim Entfernen von Lack- bzw. Farbschichten bzw. von einer Oberfläche, insbesondere einer Holzoberfläche, beschrieben. Die Holzoberfläche befindet sich in bzw. gehört zu einem Gebäude, das grundlegend restauriert wird. Die Holzoberflächen können beispielsweise zu holzvertäfelten Wänden oder Decken oder zu Holzfenstern gehören, wobei ein Holzfenster einen fest mit einem Mauerwerk verankerte Fensterrahmen und einen darin angelenkten beweglichen Fensterflügel mit einem Rahmen aus Holz zum Einfassen einer Glasscheibe umfasst. Die Außenseite der Fenster war Witterungseinflüssen ausgesetzt, so dass die außenseitigen Oberflächen der Fenster zu renovieren bzw. zu entfernen ist.

Bis in die 1980'er Jahre wurden als Anstriche für Holzoberflächen häufig Lacke und Farben verwendet, die bleihaltige Gefahrstoffe aufweisen. Die heute gebräuchlichen Verfahren zum Entfernen der Lack- bzw. Farbschichten von Holzoberflächen (Entlackungsverfahren) sind sogenannte trockene Verfahren, d.h. sie umfassen an der trockenen Oberfläche bzw. trockenen Schichten ausgeführte, abrasive Bearbeitungsschritte beim Entfernen der Schicht, beispielsweise ein Abschaben oder Abschleifen. Beim Abschleifen ist die Staubentwicklung hoch. Beim Abschaben entstehen mehr oder weniger große Partikel von Schichtresten, die zerbröseln und dabei ebenfalls Staub entwickeln.

Aufgrund der Bleihaltigkeit der Farb- bzw. Lackschichten unterliegen diese Entlackungsverfahren in Deutschland der TRGS (technische Regel für Gefahrstoffe) 505. Diese schreibt unter anderem vor, dass bei mit bleihaltigen Gefahrstoffen versehenen Arbeitsmaterialien nicht ohne besondere Schutzvorkehrungen abrasiv gearbeitet werden darf. Die vorgeschriebenen Schutzvorkehrungen umfassen ein Einkapseln von Staubquellen, das Bereitstellen von Absauganlagen zum Absaugen der eingekapselten Kernarbeitsbereiche, wo die abrasiven, staubbildenden Arbeiten ausgeführt werden, das Bereitstellen von Schleusen zum Betreten und Verlassen der eingekapselten Kernzelle und das Bereitstellen in der Schleuse von Waschanlagen und Umziehräumen zum Wechseln der Kleidung der die Entlackungsarbeiten ausführenden Personen. Die Einkapselung insbesondere von Fenstern muss nach außen und nach innen hin staubdicht ausgeführt werden.

Diese vorgenannten Schutzmassnahmen stellen einen erheblichen logistischen kostenmäßigen Mehraufwand für die auszuführenden Arbeiten dar, der nicht erforderlich wäre, wenn die zu entfernenden Farb- bzw. Lackschichten keine Gefahrstoffe enthalten würden. Im letzteren Fall wären lediglich die für die Arbeiten ausführenden Personen erforderlichen persönlichen Schutzausrüstungen nötig, die beispielsweise aufgrund von durch die Gewerbeaufsicht erlassenen Vorschriften vorgeschrieben sein können.

Durch Anwendung des erfindungsgemäßen Verfahrens kann die Entwicklung von gefahrstoffhaltigem Staub vermieden werden und die erfindungsgemäß von der Oberfläche abgelösten bzw. entfernten Farb- bzw. Lackschichten vollständig aufgefangen und in staubdicht verschließbare Behälter gesammelt und entsorgt werden.

Bei entsprechendem Nachweis, dass durch die Entlackungsarbeiten die Gefahrstoffbelastung (Schwermetallbelastung) der Umwelt und des mit den Arbeiten betrauten Personals bestimmte, beispielsweise behördlich vorgegebene, Grenzwerte nachweislich nicht überschreitet, können Ausnahmegenehmigungen erhalten werden, nach denen die Einhaltung der oben genannten, logistisch und kostenmäßig aufwändigen Vorschriften aus der TRGS 505 erlassen wird. Es sind dann nur noch persönliche Schutzmaßnahmen bzw. - vorkehrungen zum Schutz der mit den Arbeiten betrauten Personen bereitzustellen, was erhebliche logistische und kostenmäßige Einsparungen ermöglicht.

Nach einer praktisch erprobten Ausführungsform des erfindungsgemäßen Verfahrens werden Entlackungsarbeiten an Holzoberflächen in-situ durchgeführt. Zunächst wird (als Ausführungsform des Schritts (i) des erfindungsgemäßen Verfahrens) auf die von einer Holzoberfläche zu entfernenden Lack- bzw. Farbschicht ein Abbeizmittel aufgetragen, insbesondere durch Aufsprühen oder Aufpinseln. Als Abbeizmittel (als Ausführungsform des flüssigen Mittels nach der Erfindung) wird ein handelsüblich erhältliches Abbeizmittel ausgewählt, das im Sinne des Personenschutzes und des Schutzes der Umwelt unbedenklich für Innen- bzw. Außenarbeiten ist, und das bei guter Belüftung keine weiteren, als persönliche Schutzausrüstungen für die mit der Arbeit betrauten Personen erfordert. Die Auswahl des Abbeizmittels erfolgt beispielsweise anhand des dem Datenblatt des Mittels zu entnehmenden GISBAU-Codes. Als aufgrund ihrer Klassifizierung durch den GISBAU-Code bzw. der deklarierten Zusammensetzung besonders unbedenkliche Abbeizmittel können Produkte des Fabrikats "Meyer BA Uni" verwendet werden.

GISBAU ist das Gefahrstoff-Informationssystem der in Deutschland eingerichteten Berufsgenossenschaft Bau.

Das Auftragen des Abbeizmittels kann mehrfach wiederholt werden, so oft bis die Lack- bzw. Farbstoffschicht ausreichend gebeizt bzw. angelöst ist. Dabei wird dem Abbeizmittel Zeit bzw. Gelegenheit gegeben, in die Farb- bzw. Lackschicht einzudringen und seine anlösende bzw. beizende Wirkung zu entfalten. Die Farb- bzw. Lackschicht verwandelt sich unter Einwirkung des Abbeizmittels in eine feuchte, gelartige Schicht, die sich von der Oberfläche relativ leicht ablösen lässt.

Als nächstes erfolgt (als Ausführungsform des Schritts (ii) des erfindungsgemäßen Verfahrens) das Entfernen der durch das Abbeizmittel behandelten Schicht, die sogenannte Farbabnahme. Diese wird mit einer Schabeinrichtung, die insbesondere ein elektromechanisch angetriebenes Schabwerkzeug enthalten kann, bzw. mit einem Handwerkzeug, wie etwa einem Spachtel, durchgeführt. Die abgelösten Reste der durch das Abbeizmittel behandelten, insbesondere gelartig verwandelten Farb- bzw. Lackschicht können einfach auf den Boden fallen gelassen, dort gesammelt und in einen staubdicht verschließbaren Behälter gegeben werden. Optional kann während der Farbabnahme eine Materialabsaugung durchgeführt werden, beispielsweise unter Verwendung einer mobilen Absaugeinrichtung mit einem Ansaugschlauch und einer am äußeren Ende des Ansaugschlauchs vorgesehenen Ansaugdüse. Dabei wird die Ansaugdüse in der Nähe des Arbeitsbereichs der Schabevorrichtung so bzw. so dicht geführt, dass kleinere Restteile bzw. Partikel der entfernten Schicht, die andernfalls zu Boden fallen würden, in den Ansaugstutzen angesaugt werden.

Nach der Farbabnahme wird die bloßgelegte Oberfläche feucht, d.h. unter Benutzung einer Flüssigkeit, nachgereinigt. Dazu wird die bloßgelegte Oberfläche durch einen mit klarem Wasser getränkten Schwamm abgewischt. Je nach den Vorschriften des Herstellers des Abbeizmittels kann die Nachreinigung statt mit Wasser auch mit anderen Flüssigkeiten ausgeführt werden, wie etwa mit einem flüssigen Neutralisationsmittel zum Neutralisieren der ätzenden Wirkung des Abbeizmittels oder mit einem Lösemittel zum zusätzlichen Lösen bzw. Auswaschen von Lack- bzw. Farbresten aus Vertiefungen der Holzoberfläche, die von der Schabeinrichtung bzw. dem Spachtel nicht erreicht worden sind. Als Neutralisationsmittel bzw. Lösemittel werden für Personen bzw. die Umwelt unbedenkliche Mittel auf der Grundlage der Angabe im Datenblatt bzw. des GISBAU-Codes ausgewählt.

Nach der feuchten Reinigung erfolgt ein Trocknungsschritt. Dazu genügt es, eine Trocknungszeit abzuwarten, bis die nachgereinigte Oberfläche luftgetrocknet ist. Der Trocknungsvorgang kann durch Anblasen mit einem insbesondere angewärmten Luftstrom beschleunigt werden. Dies kann beispielsweise mit einer Gebläseeinrichtung, die vorgewärmte Luft ausstößt, wie etwa eine Warmluftgebläseeinrichtung, insbesondere ein Fön bzw. ein fönähnliches Gerät ausgeführt werden.

Danach erfolgt eine Weiterbearbeitung der entlackten Holzoberflächen, jeweils ohne Zwischenschliff, mit einem Imprägnierungsmittel und einem Grundierungsmittel. Auf die entlackten Holzoberflächen wird ohne Zwischenschliff ein Imprägnierungsmittel aufgebracht, insbesondere durch Aufsprühen bzw. Aufpinseln. Ebenfalls ohne Zwischenschliff wird danach ein Grundierungsmittel aufgetragen und so eine Grundierungsschicht auf der wie oben beschrieben behandelten Oberfläche aufgebracht.

Das Imprägnierungsmittel bzw. das Grundierungsmittel wird auf der Grundlage der Angaben im Datenblatt des Herstellers bzw. des GISBAU-Codes ausgewählt. Zur Auswahl kommen solche Mittel, die bezüglich des Schutzes von Personen und der Umwelt als unbedenklich klassifizierte sind. Als Imprägnierungsmittel und als Grundierungsmittel können insbesondere Produkte des Fabrikats "Sigma Coatings" verwendet werden.

Nach dem Trocknen der Grundierungsschicht kann erstmals ein Zwischenschliff erfolgen. Dieser wird mit Kleingeräten bzw. von Hand mit Schleifpads durchgeführt. Der Zwischenschliff erfolgt im wesentlichen nur bis zu einer begrenzten Arbeitstiefe, die kleiner ist als die Schichtdicke der aufgebrachten Grundierungsschicht. Der Zwischenschliff dient dazu, besonders auffällige bzw. starke Erhebungen aus der Holzoberfläche, die vor Beginn der Entlackungsarbeiten bereits vorhanden waren oder auch im Zuge der Entlackungsarbeiten, beispielsweise während der Farbabnahme, beispielsweise durch Einwirkung der Schabeeinrichtung, entstanden sind. Als zusätzliche Sicherheitsvorkehrung wird der Zwischenschliff insbesondere mit entsprechender Staubabsaugung, insbesondere unter Benutzung eines Staubfilters der Staubklasse H, ausgeführt.

Auf die Grundierungsschicht bzw. auf die zwischengeschliffene Grundierungsschicht wird der weitere Farb- bzw. Lackschichtaufbau aufgebracht.

Um vor der die Einhaltung der Vorschriften der TRGS 505 überwachenden Behörde bzw. der Gewerbeaufsicht nachzuweisen, dass die Belastung der Umwelt bzw. der mit der Durchführung der Arbeiten betrauten Personal im Rahmen von vorgegebenen Grenzwerten unbedenklich bzw. vernachlässigbar oder nicht vorhanden ist, so dass auf die Anwendung der nach der TRGS 505 vorgesehenen Maßnahmen verzichtet werden kann, können die nachfolgend beschriebenen Schritte unternommen werden.

Ein Teilbereich der Oberfläche, von der die Farb- bzw. Lackschicht zu entfernen ist, beispielsweise ein mit zu restaurierendem Farbanstrich versehener Fensterflügel aus Holz, wird unter Anwendung von üblichen Staubschutzmaßnahmen ausgebaut, verpackt und zu einer Arbeitsstätte bzw. Werkstatt mit notwendigen Schutzeinrichtungen bzw. Personenschutzausrüstungen transportiert. Der Ausbau und das Verpacken wird von Anfang an mit Schadstoffmessungen begleitet, die von einer unabhängigen, von der Behörde anerkannten Organisation durchgeführt.

Nachdem die Arbeitsstätte bzw. Werkstatt mit den erforderlichen Schutzvorkehrungen bzw. Personenschutzausrüstungen eingerichtet worden ist, wird der ausgebaute Teil der Oberfläche, beispielsweise der ausgebaute Fensterflügel, in der Werkstatt bzw. an der Arbeitsstätte aufgebaut. Dort kann zur Sicherheit einer Absaugvorrichtung bzw. eine Staubabsaugvorrichtung bereitgestellt sein. Dort können als Personenschutzausrüstung Schutzkleidung, Staubschutzmasken mit Partikelfiltern, insbesondere vom Typ P2, Schutzhandschuhe, insbesondere Nitril-Handschuhe, Schutzbrillen und Schutzschuhe bereitgestellt werden.

Im Umfeld der Arbeitsstätte bzw. Werkstatt wird die Schadstoffbelastung vor Beginn der Arbeiten und während der Durchführung der Arbeiten, insbesondere durch die unabhängige Organisation, gemessen.

Die mit den Arbeiten beauftragten Personen werden medizinisch untersucht, insbesondere können die nach der TRGS 505 vorgeschriebenen Screening-Untersuchungen zum Feststellen einer möglichen Belastung mit dem Gefahrstoff durchgeführt werden. Dies gilt für die Arbeiten an der Arbeitsstätte bzw. Werkstatt und auch für die Arbeiten in-situ, d.h. am Ort, wo sich die zu entlackenden Holzoberflächen befinden, insbesondere an der Baustelle.

Bei den oben beschriebenen Bearbeitungsschritten nach der Erfindung, die in-situ ausgeführt werden, können zum Nachweis der Unbedenklichkeit des erfindungsgemäßen Verfahrens Schadstoffmessungen, insbesondere von der unabhängigen, anerkannten Organisation ausgeführt werden. Diese Messungen können insbesondere vor dem Beginn der Entlackungsarbeiten bzw. dem Abbeizschritt, während des Abbeizschritts (Schritt (i)), während der Farbabnahme und des Einsammelns der Schichtreste in den staubdicht verschließbaren Behältern, während der Nachreinigung, bzw. während des Zwischenschleifens auf der neu aufgebrachten Grundierung ausgeführt werden.

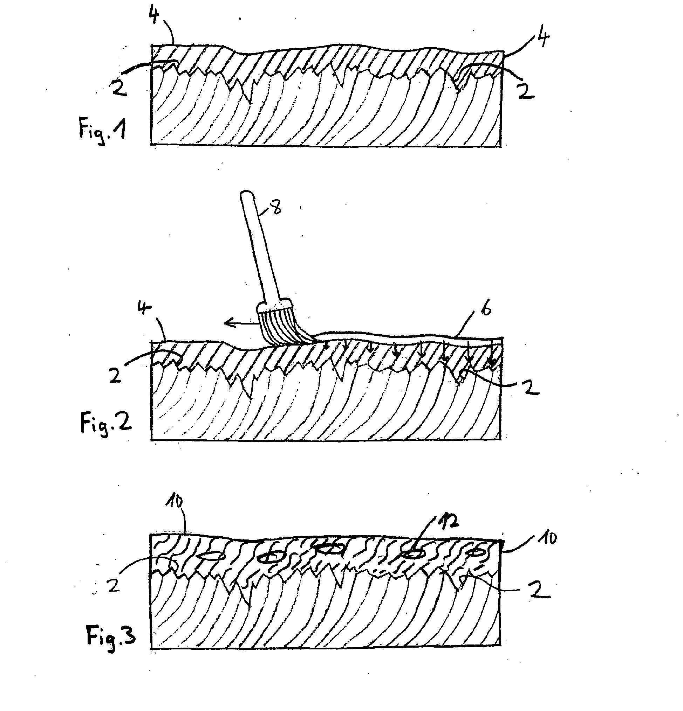

Die Schritte des Verfahrens nach der oben beschriebenen Ausführungsform werden im Folgenden mit Verweis auf die Figuren 1 bis 7 beschrieben.

Zunächst befindet sich auf der Oberfläche 2 eine zu entfernende Farb- bzw. Lackschicht 4. Wie in Fig. 1 angedeutet, weist die Holzoberfläche 2 eine, insbesondere aufgrund der Maserung des Holzes bzw. durch die bei der Herstellung der Oberfläche 2 erfolgten Bearbeitungsschritte vorgegebene Rauhigkeit auf.

Wie in Fig. 2 veranschaulicht, wird auf die zu entfernende Farb- bzw. Lackschicht 4 ein Abbeizmittel bzw. ein Abbeizmittelfilm 6 aufgebracht, beispielsweise unter Benutzung eines Pinsels 8. Das flüssige Abbeizmittel dringt, insbesondere durch Kapillarwirkung, Diffusions- und Lösungsvorgänge, in die Farb- bzw. Lackschicht 4 ein. D.h. das Abbeizmittel 6 penetriert die Farb- bzw. Lackschicht 4, wie in Fig. 2 durch die unterhalb des Abbeizmittelfilms 6 gezeigten, nach unten gerichteten Pfeile angedeutet.

Wie in Fig. 3 veranschaulicht, bewirkt das in die Farb- bzw. Lackschicht 4 penetrierte Abbeizmittel 6 ein Anlösen bzw. Beizen der Farb- bzw. Lackschicht 4. Dabei quillt die mit dem Abbeizmittel 6 behandelte Schicht 10 auf, es können sich darin Gasblasen 12 ausbilden und die Schicht wandelt sich um, so dass eine gelartige, insbesondere feuchte Konsistenz entsteht. Dadurch bleibt die Schicht stofflich gebunden und eine Staubentwicklung unterbleibt bzw. wird verhindert.

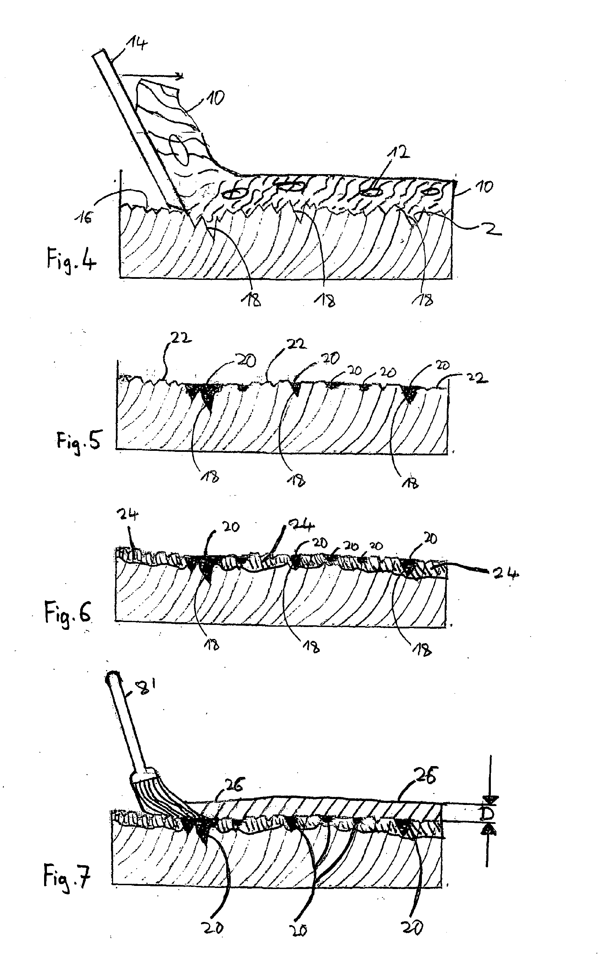

Nach dem Einwirken des Abbeizmittels 6 wird die aufgeweichte Schicht 10 vermittels einer Schabeinrichtung, beispielsweise unter Benutzung eines Spachtels 14, abrasiv, insbesondere schabend, von der Oberfläche 2 abgetragen. In dem so bearbeiteten Bereich 16 der Oberfläche kann sich durch das Einwirken der Schabeinrichtung 14 die Rauhigkeit der Oberfläche verändern, insbesondere abgeflacht, werden, wie in Fig. 4 im linken Bereich mit dem Bezugszeichen 16 veranschaulicht.

Wie in Fig. 5 veranschaulicht, verbleibt nach dem abrasiven Entfernen der gebeizten Schicht 10 eine Oberfläche, auf der im Wesentlichen bloßliegende Teile 22 der Oberfläche 2 vorhanden sind, und nur vereinzelt Schichtreste 20 verbleiben. Reste der Schicht können insbesondere in Vertiefungen 18, die von der Schabevorrichtung 14 nicht erfasst worden sind, lokalisiert sein.

Die im wesentlichen bloßgelegte Oberfläche 22 wird optional mit einer Flüssigkeit, beispielsweise durch Abwischen eines mit Wasser getränkten Schwammes, nachgereinigt und getrocknet (nicht gezeigt).

Auf die im Wesentlichen bloßgelegte, nach dem optionalen Nachreinigen auch getrocknete Oberfläche 22 wird ein Imprägnierungsmittel aufgebracht, insbesondere durch Sprühen oder Pinseln. Das Imprägnierungsmittel dringt in die bloßliegende Oberfläche 22 ein, d.h. es penetriert diese und bildet an bzw. unter der Oberfläche, insbesondere in den bloßgelegten Teilbereichen 22, eine imprägnierte Schicht 24, wie in Fig. 6 gezeigt.

Dann wird ein Grundierungsmittel aufgetragen, beispielsweise durch Aufsprühen oder, wie in Fig. 7 gezeigt, durch Aufpinseln unter Benutzung eines Pinsels 8'. Das insbesondere flüssige Grundierungsmittel weist eine relativ hohe Viskosität bzw. einen hohen Pigmentgehalt auf, so dass es die raue bzw. poröse Holzoberfläche 22 bzw. 2 im Wesentlichen nicht penetriert, sondern sich auf der Oberfläche 2 bzw. 22 ablagert. Dem aufgebrachten Grundierungsmittelfilm wird Zeit bzw. Gelegenheit zum Trocknen gegeben, so dass sich auf der Oberfläche 2, 22 eine Grundierungsschicht 26 ausbildet. Die Grundierungsschicht 26 weist eine Schichtdicke D auf, wie in Fig. 7 gezeigt.

Optional kann auf der Grundierungsschicht 26 ein Zwischenschliff ausgeführt werden (nicht gezeigt). Der Zwischenschliff wird nur innerhalb der Schichtdicke D der Grundierungsschicht 26 ausgeführt, d.h. die Bearbeitungstiefe ist geringer als die Schichtdicke D. Dadurch wird sichergestellt, dass von der Grundierungsschicht 26 überdeckte, sogenannt "maskierte" Schichtreste 20 nicht bloßgelegt werden, sondern von der Grundierungsschicht 26 überdeckt bleiben.

Auf die Grundierungsschicht 26 kann jeder beliebige, mit der Grundierungsschicht 26 kompatible Lack- bzw. Farbschichtaufbau aufgebracht werden.

Die oben beschriebene Ausführungsform des erfindungsgemäßen Verfahrens ist für das Entfernen von Farb- bzw. Lackschichten von Holzoberflächen beschrieben. Jedoch ist das Verfahren nicht darauf beschränkt, sondern kann auch zum Entfernen von Schichten von anderen Oberflächen, insbesondere Metalloberflächen angewendet werden.

Wesentliche Merkmale des erfindungsgemäßen Verfahrens sind, dass zum Entfernen der Schicht von der Oberfläche Staub erzeugende Verarbeitungsschritt vermieden werden und frühestens nach Aufbringen einer Grundierungsschicht, die möglicherweise zurückgebliebene Reste der Schicht maskiert, ausgeführt werden. Ein weiteres wesentliches Merkmal ist, dass ein flüssiges Mittel zum Anlösen bzw. Ablösen bzw. Abbeizen der Schicht aufgebracht wird (Schritt (i)), wodurch kleine lose Partikel und Staub gebunden bleiben bzw. deren Freisetzung unterbunden bzw. vermieden wird. Ein weiteres wesentliches Merkmal ist, dass das Entfernen der Schicht im Schritt (ii) erfolgt, wenn die Schicht sich in einem durch die Einwirkung des flüssigen Mittels feuchten, beispielsweise gelartigen Zustand befindet. Ein noch weiteres wesentliches Merkmal ist, dass auf der im Schritt (ii) bloßgelegten Oberfläche kein abrasiver Bearbeitungsschritt, insbesondere kein Schleifen, der Staub erzeugen würde, ausgeführt wird. Stattdessen wird optional eine Imprägnierung und jedenfalls eine Grundierungsschicht aufgebracht (Schritt (iii)). Dadurch werden mögliche Schichtreste, die beispielsweise in Vertiefungen der Oberfläche aus dem Schritt (ii) zurückgeblieben sein können, maskiert bzw. überdeckt und damit gebunden. Ein erstes Zwischenschleifen bzw. Schleifen erfolgt frühestens auf der im Schritt (iii) neu aufgebrachten Grundierungsschicht.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 2: Oberfläche
- 4: Schicht (z.B. Farb- bzw. Lackschicht)
- 6: Abbeizmittel bzw. Abbeizmittelfilm
- 8, 8': Aufbringgerät (z.B. Pinsel)
- 10: mit Abbeizmittel aufgeweichte Schicht
- 12: Gasblase
- 14: Schabgerät (z.B. Spachtel)
- 16: abgeschabte Oberfläche
- 18: Vertiefung
- 20: Schichtrest
- 22: bloßliegende Oberfläche
- 24: imprägnierte Schicht
- 26: Grundierungsschicht
- D: Schichtdicke

## Patentansprüche

1. Verfahren zum Entfernen bzw. Erneuern einer Schicht (4), insbesondere einer Lack- bzw. Farbschicht, von einer mit der Schicht (4) bedeckten Oberfläche (2), wobei insbesondere die zu entfernende Schicht (4) einen Gefahrstoff, insbesondere einen, der Schwermetalle, wie etwa Blei, anorganische Schwermetallverbindungen und schwermetallhaltige Zubereitungen, enthält, **dadurch gekennzeichnet, dass** ein Staub erzeugender Bearbeitungsschritt auf einem mit mindestens einer neu aufgebrachten Grundierungsschicht (26) bedeckten Teilbereich der Oberfläche (2) ausgeführt wird.

2. Verfahren nach Anspruch 1, **gekennzeichnet durch**:
Aufbringen einer Grundierungsschicht (26) zumindest auf einen Teilbereich der Oberfläche (2) und
Ausführen eines Staub erzeugenden Bearbeitungsschrittes, wie etwa ein Schleifen,
zumindest auf dem mit der Grundierungsschicht (26) bedeckten Teilbereich der Oberfläche (2).

3. Verfahren nach einem der vorhergehenden Ansprüche, **dadurch gekennzeichnet, dass** der Staub erzeugende Bearbeitungsschritt nur bis zu einer Tiefe, die geringer als die Schichtdicke (D) der neu aufgebrachten Grundierungsschicht (26) ist, ausgeführt wird.

4. Verfahren nach einem der vorgehenden Ansprüche, **dadurch gekennzeichnet, dass** der Staub erzeugende Bearbeitungsschritt ein Absaugen von dabei entstehenden, losen Partikeln bzw. Teilchen, insbesondere unter Benutzung einer Absaugvorrichtung, umfasst.

5. Verfahren nach einem der vorhergehenden Ansprüche, **dadurch gekennzeichnet, dass** es in-situ auf der Oberfläche (2) ausgeführt wird.

6. Verfahren nach einem der vorhergehenden Ansprüche, **dadurch gekennzeichnet, dass** es ohne Ausbau bzw. Transport von zumindest einem Teil der Oberfläche (2) zu einer anderen Arbeitsstätte bzw. zu einer Werkstatt ausgeführt wird.

7. Verfahren nach einem der vorhergehenden Ansprüche, **dadurch gekennzeichnet, dass** das Entfernen bzw. Erneuern der Schicht (4) ein Benetzen bzw. Befeuchten der Schicht mit einem flüssigen Mittel umfasst.

8. Verfahren nach Anspruch 7, **dadurch gekennzeichnet, dass** der Schritt des Benetzens bzw. Befeuchten mit des flüssigen Mittel ausgewählt ist aus einer Gruppe von Behandlungsschritten, die Aufpinseln und Aufsprühen des Mittels zumindest auf Teilbereiche der Schicht (4) und Eintauchen von zumindest Teilbereichen der Oberfläche (2) mit der zu entfernenden Schicht (4) in das flüssige Mittel oder Kombinationen daraus umfasst.

9. Verfahren nach einem der vorhergehenden Ansprüche, **gekennzeichnet durch** folgende, vor dem Aufbringen der Grundierungsschicht (26) ausgeführten Schritte:
Aufbringen eines flüssigen Mittels (6) zum Abbeizen, Aufweichen, Anlösen bzw. Ablösen, insbesondere eines Abbeizmittels, zumindest auf einen Teilbereich der zu entfernenden Schicht (4), und
Entfernen von **durch** das Einwirken des flüssigen Mittels (6) aufgeweichten, angelösten bzw. abgelösten Teilen (10) der Schicht zumindest in einem Teilbereich des Bereichs, wo das flüssige Mittel (6) aufgebracht worden ist, so dass zumindest in diesem Teilbereich bloßliegende Teile (22) der Oberfläche entstehen.

10. Verfahren nach einem der vorhergehenden Ansprüche, **dadurch gekennzeichnet, dass** vor dem Aufbringen der Grundierungsschicht (26) ein Imprägnierungsmittel bzw. eine Imprägnierungsschicht (24) aufgebracht wird.

11. Verfahren nach einem der Ansprüche 3 bis 7, **dadurch gekennzeichnet, dass** es ferner vor dem Aufbringen der Grundierungsschicht (26) ein Reinigen der Oberfläche unter Benutzung einer Flüssigkeit umfasst,
wobei das Reinigen insbesondere ein Aufbringen eines Flüssigkeitsfilms zumindest auf Teilbereiche der Oberfläche und ein anschließendes Entfernen, insbesondere durch Abwischen, des Films umfasst.

12. Verfahren zum Nachweis der Einhaltung bei Arbeiten an einem zu bearbeitenden, einen Gefahrstoff enthaltenden Objekt bzw. Gegenstand von Vorschriften über die Begrenzung der Freisetzung eines Gefahrstoffs, insbesondere in der Form von Staub, bzw. von Vorschriften zum Schutz der Umwelt und von einer mit den Arbeiten betrauten Person vor einer Belastung mit dem Gefahrstoff, beispielsweise beim Entfernen einer Schicht, die einen Gefahrstoff enthalten kann, von einer Oberfläche, welches Verfahren umfasst:
Durchführung eines Verfahrens nach einem der Ansprüche 1 bis 11 sowie mindestens einen Schritt, der ausgewählt ist aus einer Gruppe, die folgendes umfasst:
(a) Ausbau bzw. Demontage eines zu bearbeitenden Objekts bzw. Gegenstands und Transport zu einer Bearbeitungsstätte, wo nach geltenden Vorschriften erforderlichen Schutzeinrichtungen bzw. Schutzvorkehrungen, einschließlich insbesondere Personenschutzausrüstung, eine staubdichte Umhüllung bzw. ein staubdichter Raum mit Luftabsaugung und Luftfilterung, bereitgestellt sind,
(b) Messung der Belastung der Umwelt, einschließlich insbesondere der Luft bzw. mit Staub besetzbaren Oberflächen, mit dem Gefahrstoff vor Beginn der Ausführung des Verfahrens nach einem der Ansprüche 1 bis 11 im Umfeld des Ausbau- bzw. Demontageorts bzw. im Umfeld der Bearbeitungsstätte,
(c) Messungen der Belastung der Umwelt mit dem Gefahrstoff während bzw. nach Ausführung eines der Schritte nach einem der Verfahren nach den Ansprüchen 1 bis 11 bzw. 22(a),
(d) medizinische Untersuchung von zumindest einer Person, die zumindest einen Verfahrenschritt des Verfahrens nach einem der Ansprüche 1 bis 11 ausführt bzw. beiwohnt, auf Belastung mit dem Gefahrstoff, oder Kombinationen aus den Schritten (a) bis (d).

13. Verfahren nach Anspruch 12, **dadurch gekennzeichnet, dass** es umfasst:
Nachweisen, dass bei mindestens einem der Schritte (b) und (c) mindestens ein vorgeschriebener Grenzwert für die Belastung der Umwelt mit dem Gefahrstoff eingehalten wird, insbesondere alle vorgeschriebenen Grenzwerte eingehalten werden, und/oder
Nachweisen, dass beim Schritt (d) mindestens ein vorgeschriebener Grenzwert für die Belastung der Person mit dem Gefahrstoff eingehalten wird, insbesondere alle vorgeschriebenen Grenzwerte eingehalten werden,
wobei beispielsweise der Gefahrstoff Blei und ein vorgeschriebener Grenzwert eine Konzentration von nicht mehr als 0,1 mg/m3 Blei in der Luft ist.

14. Verfahren nach Anspruch 12 oder 13, **dadurch gekennzeichnet, dass** es umfasst:
Erlangen einer Ausnahmegenehmigung, die von mindestens einer Pflicht zur Einhaltung einer Vorschrift zum Schutz der Umwelt bzw. von mit der Arbeit betrauten Person befreit, insbesondere wenn mindestens einer der Nachweise nach Anspruch 24 oder 25 erbracht worden ist, insbesondere alle Nachweise nach Anspruch 24 oder 25 erbracht worden sind.
